(19) Europäisches Patentamt
European Patent Office
Office européen des brevets

(11) **EP 4 390 824 A1**

(12) **EUROPEAN PATENT APPLICATION**

(43) Date of publication:
**26.06.2024   Bulletin 2024/26**

(21) Application number: **23204884.3**

(22) Date of filing: **20.10.2023**

(51) International Patent Classification (IPC):
***G06Q 30/0251*** *(2023.01)*      ***G06Q 30/0272*** *(2023.01)*
***G06Q 30/0241*** *(2023.01)*

(52) Cooperative Patent Classification (CPC):
**G06Q 30/0269; G06Q 30/0253; G06Q 30/0255;
G06Q 30/0271; G06Q 30/0272; G06Q 30/0276;
G06Q 30/0277;** G06Q 30/0201

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **20.12.2022   JP 2022203285**

(71) Applicant: **Rakuten Group, Inc.
Setagaya-ku
Tokyo 158-0094 (JP)**

(72) Inventors:
• **ISHIKAWA, Shion
Tokyo, 158-0094 (JP)**
• **LIU, Yun Ching
Tokyo, 158-0094 (JP)**

(74) Representative: **Hoffmann Eitle
Patent- und Rechtsanwälte PartmbB
Arabellastraße 30
81925 München (DE)**

(54) **POLICY EVALUATION DEVICE, POLICY EVALUATION METHOD, AND POLICY EVALUATION PROGRAM**

(57)     A policy evaluation device includes one or more processors and one or more memories. The memory stores history data that includes datasets, the history data being a record obtained when a first policy was implemented. The processor is configured to generate multiple pieces of segmented data by segmenting the datasets based on at least one requirement related to the first policy remaining unchanged, generate a learning model related to a second policy for each of segments by training a machine learning algorithm using each of the pieces of segmented data, and perform off-policy evaluation for the second policy using an estimated value approximated from each of the pieces of segmented data.

Fig.1

**Description**

1. Field

The present disclosure relates to a policy evaluation device, a policy evaluation method, and a policy evaluation program.

2. Description of Related Art

For example, in the case of determining the content of an advertisement displayed in a single advertising slot (e.g., a banner advertisement on a webpage), machine learning models may be used to predict the effectiveness of the advertisement. Japanese Laid-Open Patent Publication No. 2022-032204 discloses an example of a learning model that outputs a prediction result of the advertising effectiveness when receiving the image of an advertisement design proposal.

To issue an actual advertisement, after determining the image for the advertisement, it is necessary to determine a policy, such as what time and to which user that image will be displayed. To evaluate this policy, for example, in an online advertisement, an online experiment may be conducted to temporarily implement that advertisement. However, implementing the advertisement not only incurs costs but also carries risks (e.g., negative user impressions or decreased sales) if the policy is not appropriate.

To solve this problem, Yuta Saito et al. have disclosed off-policy evaluation, a method for evaluating a low-risk policy ("Open Bandit Dataset and Pipeline: Towards Realistic and Reproducible Off-Policy Evaluation", [online], October 26, 2021 (v5), arXivLabs, [accessed December 16, 2022], Internet <URL: https://arxiv.org/abs/2008.07146>). The evaluation of such a policy is applicable not only to advertising but also to various fields, such as various types of marketing or communication with customers.

In the off-policy evaluation, data from past policy implementations is used to evaluate the performance of a new policy that is different from past ones. Nevertheless, this evaluation may be biased.

It is an objective of the present disclosure to provide a policy evaluation device, a policy evaluation method, and a policy evaluation program capable of addressing biases in off-policy evaluation.

SUMMARY

This Summary is provided to introduce a selection of concepts in a simplified form that are further described below in the Detailed Description. This Summary is not intended to identify key characteristics or essential characteristics of the claimed subject matter, nor is it intended to be used as an aid in determining the scope of the claimed subject matter.

A policy evaluation device according to an aspect of the present disclosure includes one or more processors and one or more memories. At least one of the one or more of the memories stores history data that includes datasets, the history data being a record obtained when a first policy was implemented. At least one of the one or more processors is configured to generate multiple pieces of segmented data by segmenting the datasets based on at least one requirement related to the first policy remaining unchanged, generate a learning model related to a second policy for each of segments by training a machine learning algorithm using each of the pieces of segmented data, and perform off-policy evaluation for the second policy using an estimated value approximated from each of the pieces of segmented data.

A policy evaluation method according to an aspect of the present disclosure includes causing one or more computers to acquire history data that includes datasets, the history data being a record obtained when a first policy was implemented, generate multiple pieces of segmented data by segmenting the datasets based on at least one requirement related to the first policy remaining unchanged, generate a learning model related to a second policy for each of segments by training a machine learning algorithm using each of the pieces of segmented data and perform off-policy evaluation for the second policy using an estimated value approximated from each of the pieces of segmented data.

A policy evaluation program according to an aspect of the present disclosure includes causes one or more computers to acquire history data that includes datasets, the history data being a record obtained when a first policy was implemented, generate multiple pieces of segmented data by segmenting the datasets based on at least one requirement related to the first policy remaining unchanged, generate a learning model related to a second policy for each of segments by training a machine learning algorithm using each of the pieces of segmented data. and perform off-policy evaluation for the second policy using an estimated value approximated from each of the pieces of segmented data.

Other features and aspects will be apparent from the following detailed description, the drawings, and the claims.

BRIEF DESCRIPTION OF DRAWINGS

Fig. 1 is a diagram showing the configuration of a system including a policy evaluation device according to an embodiment.
Fig. 2 is a diagram showing an example of a website that displays an advertisement.
Fig. 3 is a flowchart illustrating the policy evaluation method of the embodiment.

Throughout the drawings and the detailed description, the same reference numerals refer to the same elements. The drawings may not be to scale, and the relative size, proportions, and depiction of elements in the drawings may be exaggerated for clarity, illustration, and convenience.

DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.
Exemplary embodiments may have different forms, and are not limited to the examples described. However, the examples described are thorough and complete, and convey the full scope of the disclosure to one of ordinary skill in the art.
In this specification, "at least one of A and B" should be understood to mean "only A, only B, or both A and B."
Example of a policy evaluation device, a policy evaluation method, and a policy evaluation program according to the present disclosure will now be described with reference to the drawings.

Overview of System

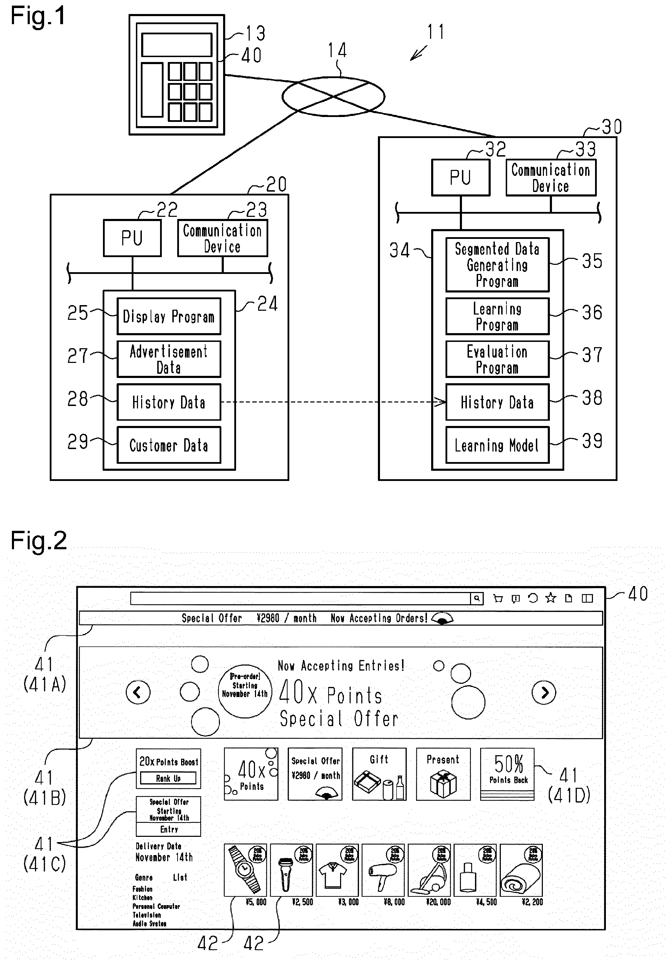

As shown in Fig. 1, a policy evaluation system 11 of the present disclosure includes a web server 20 and a policy evaluation device 30. The web server 20 and the policy evaluation device 30 communicate with each other via a network 14. Each of the web server 20 and the policy evaluation device 30 is an example of a computer.
The web server 20 communicates with one or more terminals 13 via the network 14. The terminal 13 is, for example, an information processing device such as a smartphone, a personal computer, or a tablet. The terminal 13 is a user terminal operated by a user. The web server 20 may provide a website 40 that provides or recommends a product or service. The website 40 may include a search window (not shown, but for example, a text box) to search for a product or service. In response to requests from one or more of the terminals 13, the web server 20 provides various types of information or processing results to the terminals 13.
The network 14 includes, for example, the Internet, a wide area network (WAN), a local area network (LAN), a provider terminal, a wireless communication network, a wireless base station, and a dedicated line. All the combinations of the devices shown in Fig. 1 do not necessarily have to communicate with one another. The network 14 may partially include a local network.
The web server 20 includes a processor 22, a memory 24, and a communication device 23. The communication device 23 allows for communication with another device via the network 14, such as the terminal 13 and the policy evaluation device 30. The memory 24 stores a display program 25 that is used for displaying an advertisement, advertisement data 27, history data 28. The memory 24 may further store customer data 29 that can be targeted for advertisements.
The customer data 29 includes, for example, registration information of a user who uses the website 40. Examples of the registration information include, but are not limited to, each user's name, age, gender, address, account, email address, and settlement information. Examples of the settlement information include credit card numbers, debit card numbers, and direct debit account numbers. The customer data 29 may include the purchase history of each user on the website 40 as well as in other stores. Examples of the purchase history include the name of a purchased product, the date and time of purchase, and a purchase amount.
The history data 28 may include the browsing history, purchase history, or usage history on the website 40 by each user. The history data 28 includes an access history (e.g., click history) by each user for the links contained in the website 40 (e.g., links to advertisements or product pages). By linking with the customer data 29, the history data 28 may include at least part of the user's registration information as the user's attribute information. Examples of the user's attribute information contained in the history data 28 include the age, sex, browsing history, usage history, and access history of each user.

The policy evaluation device 30 includes one or more processors 32, one or more memories 34, and a communication device 33. The policy evaluation device 30 is, for example, a computer such as a server. The communication device 33 allows for communication with another device, such as the web server 20, via the network 14. Each memory 34 stores a segmented data generating program 35, a learning program 36, and an evaluation program 37. The memory 34 is further configured to store history data 38 and one or more learning models 39. The processor 32 of the policy evaluation device 30 executes the learning program 36 stored in the memory 34 to generate the learning model 39.

The web server 20 sends the history data 28 stored in the memory 24 to the policy evaluation device 30 in response to a request of the policy evaluation device 30 or in accordance with a program for data transmission. The policy evaluation device 30 stores, as the history data 38, the received history data 28 in the memory 34. The history data 28 may be stored as the history data 38 in the memory 34 of the policy evaluation device 30 via another portable memory.

The processors 22, 32 each include, for example, a CPU, a GPU, and a TPU. Each of the processors 22, 32 is processing circuitry configured to execute various types of software processing. The processing circuitry may include a dedicated hardware circuit (e.g. ASIC) used to process at least part of the software processing. That is, the software processing simply needs to be executed by processing circuitry that includes at least one of a set of one or more software processing circuits and a set of one or more dedicated hardware circuits.

The memories 24 and 34 are computer-readable media. The memories 24, 34 may each include, for example, a non-transitory storage medium such as a random access memory (RAM), a hard disk drive (HDD), a flash memory, and a read-only memory (ROM). The processors 22, 32 execute a series of instructions included in the program stored in the memories 24, 34, respectively, upon a given signal or upon satisfaction of a predetermined condition.

Advertising System

As shown in Fig. 2, the website 40 presents information for offering various types of products or services. The website 40 is, for example, a shopping website where multiple products are sold. Examples of the products or services offered at the website 40 include, but are not limited to, travel plans, accommodations, tickets, books, magazines, music, videos, movies, insurance, or securities.

The website 40 may include one or more advertising slots 41 (41A, 41B, 41C, 41D). The website 40 may include recommendation slots 42, each displaying a recommended product. The advertising slot 41 and the recommendation slot 42 are an example of a display slot. A single advertising slot 41A may display an advertisement image (e.g., a banner advertisement). Alternatively, a single advertising slot 41B may sequentially display two or more candidate images. When there are multiple advertising slots 41A to 41D, the display method and content can differ from one another. There may be multiple advertising slots 41B (or 41C) of the same type.

The advertisement images or product images displayed on the website 40 may be changed in accordance with a predetermined rule. For example, an image may be changed for each period or may be changed depending on the attribute of a user who is browsing. For example, during the period of a sales promotion event (e.g., one month), multiple (e.g., five) candidate images may be prepared for display in a single banner advertising slot. These images may then be sequentially displayed according to a predetermined order. Moreover, some of the candidate images (for example, discount coupons) may be replaced with other candidate images (other discount coupons) during the event period.

The advertisement data 27 includes the types of the advertising slots 41, one or more candidate images corresponding to each advertising slot 41, a display change history for each advertising slot 41, and an advertising policy for each period. The display change history includes, for each unit of the advertisement (e.g., each event), one or more advertisement images that will be used or are candidates for use, the date and time at which each advertisement image starts to be used, and the data related to the advertising slot 41 on which the advertisement is displayed.

The history data 38 includes datasets. Each dataset includes multiple pieces of data acquired each time the user makes a request for displaying the website 40 (and displaying the advertisement contained in the website 40) to the web server 20. These multiple pieces of data, for each advertising slot 41, include data related to, for example, attributes of the user who requested the display, the display time, the advertisement displayed at each time, and whether that advertisement has been clicked. Further, each dataset may include data related to whether the user who clicked on the advertisement has purchased a product related to the advertisement.

Policy Implementation

A policy refers to a method or plan for recommending some content to a user and encouraging the user to do some action. For example, in an advertising policy using a banner advertisement, the objective is to encourage a user to click on the banner advertisement (an advertisement image with a link) to purchase a product related to the advertisement. Alternatively, in email marketing, the objective is to get the user who received the email to click on the link contained within the body of the email.

A click-through rate is an example of an index used to achieve the goal of getting users to purchase the product displayed on the linked page. Additionally, indices such as a conversion rate per click (conversion rate via clicks) or revenue per advertising cost can also be used.

The click-through rate of a previously implemented advertising policy can be calculated based on the history data 38. The click-through rate can vary depending on the advertising policy, such as the location and time of displaying the advertisement, or the attributes of target users. Thus, the implementation of a new policy requires optimization of the advertising content to enhance its effectiveness.

A machine learning model may be used to optimize a new policy. The processor 32 is configured to optimize a policy, for example, by executing the learning program 36 using a multi-armed bandit algorithm, which is an example of reinforcement learning. The multi-armed bandit algorithm addresses the problem of sequentially searching for the best option among multiple candidates that are referred to as arms. The learning program 36 uses, for example, Thompson sampling.

For example, by defining the feature (feature vector) as $x \in X$ and the possible m actions as $a \in A = \{1, 2, ... , m\}$, one addresses the multi-armed bandit problem to search for an action a that maximizes a reward Y over a certain period. The feature x is, for example, a user attribute such as the age, sex, and purchase history of the user. The action a is, for example, a product targeted by an advertisement. The reward Y may be, for example, a click-through rate or may be the sales resulting from advertising a certain product.

A policy $\pi$ is defined as a map from the feature $x \in X$ to a probability distribution over an action space A, denoted as $\pi$: X->$\Delta$(A). Here, $\pi(a|x)$ is the probability (action selection probability) of selecting the action a for data characterized by a certain vector x. Also, $\pi$ (a|x) is a policy for decision-making that dictates which action to take in any given situation. For example, $\pi$ (a|x) may be a function that indicates which product should be targeted by an advertisement (which advertisement image should be displayed) when x (certain user attribute) is input.

Evaluation for Policy

The processor 32 is configured to evaluate a new policy by executing the evaluation program 37. Evaluating without implementing a new policy is referred to as off-policy evaluation (OPE), also known as off-policy evaluation or offline policy evaluation. A policy under evaluation may be referred to as an evaluation policy $\pi$. A policy that is compared with the evaluation policy may be referred to as a behavior policy rrb.

In the present disclosure, the behavior policy is referred to as a first policy and the evaluation policy is referred to as a second policy. The first policy is generally a previously implemented past policy. In this example, the record from when the first policy was implemented is the history data 38. The history data 38 includes datasets. However, the first and second policies may be previously implemented policies.

The performance of the policy $\pi$ is defined as the following objective variable V($\pi$).

## Equation 1

$$V(\pi) = \mathbb{E}_{(Y(\cdot), X)} \left[ \sum_{a \in \mathcal{A}} Y(a)\pi(a|X) \right]$$

The objective variable V($\pi$) is an expected value of an index indicating a case in which the policy $\pi$ is executed. For example, when the reward Y is the presence or absence of a click, V($\pi$) is the click-through rate expected when policy $\pi$ is implemented.

The performance of the second policy $\pi$ can be evaluated using the history data 38 from when the first policy was implemented. For example, the history data 38 includes T datasets, shown in the following equation 2.

## Equation 2

$$\mathcal{D} = \{(x_t, a_t, Y_t)\}_{t=1}^{T}$$

For example, when a banner advertisement for a certain product (a) is shown to a user with a particular attribute (x), Yt is 1 if the banner is clicked and Yt is 0 if not clicked.

If the user selects the action a, the history data 38 includes only the data of the reward Yt based on the action a. For example, among the first and second products, if the first product is recommended to the user (action a = first product), the result (i.e., whether it was clicked) is known. However, if the first product is not recommended, the result is not known. In other words, if the reward Y is obtained by recommending the first product in a past policy and the second product is recommended in a new policy, the data in a case in which the second product is recommended (action a = second product) is not included in the history data 38. Thus, it is difficult to obtain a true performance of the new policy $\pi$ based on the history data 38.

The performance of the new policy $\pi$ may be substituted with the following equation 3 as an estimated value approximated from the history data 38 in relation to $V(\pi)$, which is true performance.

Equation 3

$$\hat{V}_{IPW}(\pi; \mathcal{D}) = \frac{1}{T} \sum_{t=1}^{T} Y_t \frac{\pi(a_t|x_t)}{\pi_b(a_t|x_t)}$$

This technique is inverse probability weighting (IPW). In IPW, the index value indicating the result of the first policy (the observed objective variable, such as click-through rate) is weighted using the ratio of the action selection probability of the first policy to the action selection probability of the second policy to calculate the estimated value.

Instead of using equation 3, the following equation 4 may be used to obtain the estimated value. The technique used in equation 4 is doubly robust.

Equation 4

$$\hat{V}_{DR}(\pi; \mathcal{D}) = \hat{V}_{DM}(\pi; \mathcal{D}) + \frac{1}{T} \sum_{t=1}^{T} (Y_t - \mu(x_t, a_t)) \frac{\pi(a_t \mid x_t)}{\pi_b(a_t \mid x_t)}$$

In DR, the estimation error of a model $\mu$ for the expected value of the objective variable is corrected using methods similar to IPW. The calculation of the estimated value with DR includes weighting the index value indicating the result of the first policy, using the ratio of the action selection probability of the first policy to the action selection probability of the second policy. For example, the above publication discloses a method for obtaining the estimated value for off-policy evaluation such as equations 3 and 4.

A case in which the advertising slot 41A displays a banner advertisement to evaluate the second policy that optimizes the user attribute targeted by an advertisement will now be described as an example. The banner advertisement includes multiple (for example, five) candidate images. These candidate images are displayed in the advertising slot 41A in accordance with the rule specified by a policy. For example, the first policy (behavior policy) defines the proportions of the five candidate images to be displayed in the advertising slot 41A. In the first policy, the five candidate images are displayed, for example, in a fixed order or at random at the same proportions. In this case, the click-through rate calculated from the history data 38 indicates the performance of the first policy.

When showing the same five candidate images as those of the first policy in the same advertising slot 41A, the second policy (evaluation policy $\pi$) of this example determines which candidate image is displayed based on the user attribute. Thus, in the second policy, the proportions of displaying five candidate images may differ depending on the user. In this example, the estimated value (e.g., click-through rate) obtained when the second policy is executed is calculated. When the click-through rate is calculated as the estimated value, the expected profit in a case in which a new policy is applied can be estimated based on the conversion rate per click and the revenue per conversion.

The estimated value calculated using equations 3 and 4 is based on the advertising content remaining unchanged during the execution of the first policy. However, changes can occur in one or more requirements related to the advertising content during the first policy. For example, if some of the five candidate images are changed to other candidate images one or more times during a period in which the history data 38 is recorded, the requirements for the change include the lineup of candidate images used for the advertisement.

Further, the estimated value calculated by equation 3 or 4 is biased because the advertising content (lineup) remains unchanged. For instance, among the five candidate images, if the one with the lowest click-through rate is replaced by an image with a higher advertising effect, there is a possibility that the click-through rates of the replaced image as well as the remaining four images may vary before and after the change.

To address the bias, in the present disclosure, the datasets included in the history data 38 are segmented based on at least one of the requirements related to the first policy (e.g., lineup of candidate images) remaining unchanged. Then, the segmented data generated through the segmentation is used to calculate the estimated value for each segment.

For example, the processor 32 executes the segmented data generating program 35 to segment n datasets included in the history data 38 into K datasets and create K pieces of segmented data. In this process, the processor 32 is used as a segmented data generator configured to generate datasets as segmented data based on the segments in which at least one of the requirements related to the first policy remains unchanged. Further, the processor 32 executes the segmented data generating program 35 or another division program (not shown) to divide each piece data into training data and evaluation data.

Each dataset includes, for example, data related to the time at which an advertisement was displayed (timestamp), the feature x (attribute of user), the corresponding action a (image displayed at each time), and a result r of the action (whether the image has been clicked). For example, when one of five candidate images is changed for each week in an advertising event carried out for four weeks, four pieces of segmented data in which the five candidate images remain unchanged for one week are created.

For the segmented data, the kth segment is defined as follows.

### Equation 5

$$[n_k, n_{k+1}) := \{n_i \in \mathbb{N} \mid k \leq i < k+1\}$$

Further, the kth segmented data $D_k$ is defined as follows.

### Equation 6

$$\mathcal{D}_k := \{(x_i, a_i, r_i)\}_{i=n_k}^{n_{k+1}}.$$

Furthermore, $\pi b$ related to the first policy is calculated in the following equation 7.

### Equation 7

$$\pi_k^b(a_i|x_i) = \frac{|\{a \in \mathcal{D}_k \mid a = a_i\}|}{n_{k+1} - n_k}$$

Policy Evaluation Method

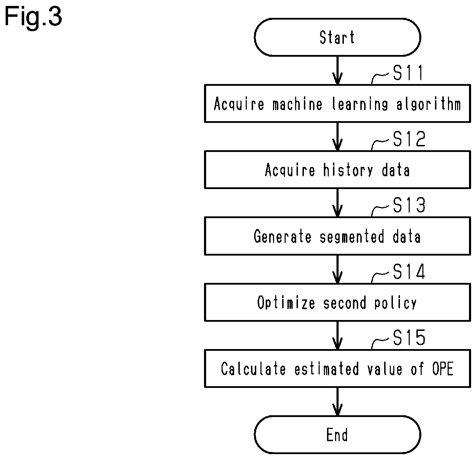

The policy evaluation method of the present disclosure will now be described with reference to Fig. 3.

In the present example, the history data 38 includes datasets acquired when a special offer is provided in an advertisement. Each dataset includes multiple pieces of data acquired each time the user makes a request for displaying the website 40. The website 40 includes one or more advertising slots 41 (or one or more recommendation slots 42). The first and second policies are related to displaying an advertisement image (or a product image) in each advertising slot 41 (or recommendation slot 42). The feature x is the user's attribute, the action a includes multiple candidate images, and the result r of the action is whether the user has clicked on the displayed advertisement image (or product image). The index value indicating the result of the first policy is a click-through rate. In this example, multiple candidate images remain unchanged in each segment.

First, in step S11, the processor 32 acquires a machine learning algorithm (e.g., a multi-armed bandit algorithm) used to implement the second policy. Specifically, the processor 32 acquires the learning program 36 and stores it in the memory 34.

In step S12, the processor 32 acquires the history data 38. Specifically, the processor 32 receives the history data 28 from the web server 20 and stores it in the memory 34 as the history data 38. Step S12 may be performed before step S11 or at the same time as step S11.

In step S13, the processor 32 executes the segmented data generating program 35 to generate segmented data, based on at least one requirement related to the first policy remaining unchanged, from the datasets included in the history data 38. Further, the processor 32 executes the segmented data generating program 35 or another division program to divide each segmented data into training data and evaluation data.

In step S14, the processor 32 uses the segmented data generated in step S13 to make a simulation in the algorithm acquired in step S11 and optimize the second policy. Specifically, the processor 32 executes the learning program 36 using the training data, into which the segmented data has been divided, to generate the learning model 39 optimized for each segment by training a machine learning algorithm using each segmented data. In this process, the processor 32 is used as a learning model generator configured to generate a learning model related to the second policy for each segment. Further, the processor 32 stores the generated learning model 39 in the memory 34.

In step S15, the processor 32 executes the evaluation program 37 to calculate the estimated value of off-policy evaluation (OPE) approximated from the segmented data. Specifically, in the above equation 3 or 4, the processor 32 sets $D = D_k$ and calculates an estimated value related to the second policy using the learning model, which is generated for each segment, and the evaluation data, into which the segmented data has been divided. In this case, in equation 3 or 4, $\pi$b is calculated as the distribution of the frequency of the datasets of the entire history data 38. The processor 32 is used as an evaluation unit configured to use an estimated value approximated from the segmented data to perform off-policy evaluation for the second policy.

Operation of Present Disclosure

In off-policy evaluation, the history data 38 in the past is used to evaluate a new policy (second policy) while avoiding risks and cost increases that occur in online evaluation. However, if one or more requirements related to the first policy (e.g., images for advertising) is changed during execution of the first policy, the history data 38 may include variations in the data resulting from the change in the requirements. Thus, when the history data 38 of the first policy is used for the off-policy evaluation for the second policy, which differs from the first policy, the estimated value for evaluation is biased.

In the present disclosure, multiple pieces of segmented data are generated by dividing the datasets included in the history data 38 into segments in which one or more requirements related to the first policy remain unchanged. Further, the learning model 39 for the second policy is generated for each segment. Then, the estimated value approximated from the segmented data is used to perform off-policy evaluation for the second policy. Accordingly, the biases in the off-policy evaluation are addressed.

Advantages of Present Disclosure

The present disclosure has the following advantages.

(1) Biases in off-policy evaluation are addressed by generating a learning model related to the second policy for each segment and then performing the off-policy evaluation using the estimated value approximated from the segmented data.
(2) By generating a learning model using a reinforcement learning algorithm such as a multi-armed bandit algorithm, a policy that maximizes cumulative reward is implemented.
(3) To calculate the estimated value, the index value indicating the result of the first policy is weighted using the ratio of the action selection probability of the first policy to the action selection probability of the second policy. Thus, the second policy is evaluated using the history data 38 obtained when the first policy was implemented.
(4) Segmented data is generated based on the fact that candidate images that may be displayed on each advertising slot 41 remain unchanged. Thus, biases in the off-policy evaluation are addressed.
(5) The history data 38 including user attributes is used for off-policy evaluation of the second policy. This allows for implementation of a second policy capable of displaying an advertisement corresponding to the user attributes. Thus, an increase in the click-through rate of an advertisement is expected.

The present embodiment may be modified as follows. The present embodiment and the following modifications can be combined as long as they remain technically consistent with each other.

First Modification

The first policy and the second policy are not limited to displaying images in the advertising slot 41 or the recommendation slot 42 of the website 40, but may include displaying images in a display slot. For example, the display slot may be used in digital signage where information is transmitted by setting up a visual display device (e.g., a display or projector) in stations, stores, facilities, offices, or the like. When the visual display device transmits information, the feature x may be an attribute of the location where information is displayed or may be an attribute of the method for transmitting information. Additionally, the action a may be each candidate image, and the result r of the action may be an inquiry related to the displayed content or may be a sales promotion effect.

Alternatively, the first policy and the second policy may each include displaying, in a display slot that displays search results on a search site, one of the result candidates that can be search results. In this case, the feature x may be an attribute of the user who did the search, the action a may be each search result, and the result r of the action may be whether the user has clicked on the displayed search result.

Second Modification

The first policy and the second policy are not limited to selecting images, but may each include selecting one or more target candidates from multiple target candidates. For example, the first policy and the second policy may each include determining a product, service, user, or user attribute of the product targeted by advertising or marketing. Examples of the target candidate may include a user or delivery address to which postal advertisements are sent, an area targeted for posting, or an email recipient address. Alternatively, the target candidate may be a user, user attribute, or phone number that is a candidate for telemarketing or telephone appointments for guiding monitor recruitment, sales, or service. As another option, the target candidate maybe a coupon or product sample distributed to users through various mediums (either paper or electronic).

In this case, the feature x may be an attribute of the target candidate, the action a may be multiple target candidates, and the result r of the action may be whether there is a reaction or whether the reaction is satisfactory (i.e., whether a desired response is obtained).

In the second modification, segmented data is generated based on multiple target candidates remaining unchanged. Thus, biases in the off-policy evaluation are addressed.

Third Modification

The first policy and the second policy may each include determining a display order in which images are displayed sequentially in a single display slot. In this case, multiple images simply need to be unchanged in each segment. The display slot in this case may be, for example, a display slot of a carousel advertisement, a display slot of a banner advertisement, a display slot of a recommended product, or a notification slot that notifies users of update information. These display slots may be included in an image displayed by the visual display device of the first modification or may be included in a website.

In the third modification, segmented data is generated based on multiple images remaining unchanged. Thus, biases in the off-policy evaluation are addressed.

Fourth Modification

The first policy and the second policy may each include selecting one or more products or services recommended for a user from multiple products or multiple services. In this case, the prices of multiple products or multiple services may be unchanged in each segment. Instead, an assortment of multiple products or multiple services may be unchanged in each segment. Alternatively, the prices and assortment may be unchanged. Examples of the services include music, movies, videos, TV programs, insurance products, and financial products.

In this case, the feature x may be an attribute of the user (e.g., age, gender, past browsing history, or past purchase history), the action a may be the type of a product or service, and the result r of the action may be whether there is a reaction, whether a purchase was made, or a viewing time.

In the fourth modification, segmented data is generated based on at least one of the price and assortment remaining unchanged. Thus, biases in the off-policy evaluation are addressed.

Fifth Modification

The website 40 may be configured to present a search screen used for searching for products or services and present its search results screen. In this configuration, each dataset included in the history data includes multiples pieces of data acquired each time the user makes a search request on a search screen. The first policy and the second policy each include determining the order (ranking) of displaying the search results displayed on the search results screen and displaying the search results on the search results screen along with the order based on search intent. The search results may change due to, for example, a change in the search algorithm. In this case, the search results may be unchanged in each segment, the assortment of products or services targeted by search may be unchanged in each segment, or the search results and the search targets may be unchanged.

In the fifth modification, segmented data is generated based on at least one of a set of the search results and a set of search results remaining unchanged. Thus, biases in the off-policy evaluation are addressed.

Sixth Modification

The policy evaluation device 30 may be a policy evaluation system that includes a segmented data generating device (e.g., computer) that generates segmented data, a learning device (e.g., computer) that generates a learning model related to the second policy, and an evaluation device (e.g., computer) that performs off-policy evaluation for the second policy. The policy evaluation system may further include the web server 20. That is, the policy evaluation device 30 is not limited to a device that is physically accommodated in a single housing. Instead, the policy evaluation device 30 may be a virtual device that includes computers, each providing functional units (e.g., a data acquisition unit that acquires history data, a segmented data generator, a learning model generator, and an evaluation unit).

Seventh Modification

The machine learning algorithm for implementing the second policy is not limited to a multi-armed bandit algorithm. The machine learning algorithm may be, for example, an algorithm related to another type of reinforcement learning.

Eighth Modification

The index value that indicates the result of a policy, the feature x, the action a, and the result r of the action are not limited to those illustrated in the present disclosure, but may be changed. For example, when the attribute information of a user who is accessing, for example, the display related to the policy cannot be acquired, the feature x may be an attribute of the product or service targeted by an advertisement or may be changed to a feature such as an attribute of a display slot (e.g., size or display position).

Ninth Modification

The conditions for generating segmented data may be changed. For example, changes in the environment surrounding the user, such as public policy or tax rate changes, shifts in social conditions or behavioral patterns, or changes in seasons or weather, may be used as the starting points for segmentation. Additionally, a certain margin may be set between segments until changes stabilize. This is because a user's actions may also change in response to such environmental changes. Further, when segmented data is created, multiple datasets may be divided into segments where several requirements remain unchanged. In particular, the segmented data may be generated such that one or more requirements that are expected to be heavily biased remain unchanged. In contrast, if a change in the requirement has a relatively small influence, segmentation based on the requirement does not need to be performed. That is, "at least one requirement" in the present disclosure means a requirement that can have a significant influence on off-policy evaluation.

The aspects understood from the above embodiment and the modifications are as follows.

[Aspect 1] A policy evaluation device, including:

one or more processors; and
one or more memories, where
at least one of the one or more of the memories stores history data that includes datasets, the history data being a record obtained when a first policy was implemented,
at least one of the one or more processors is configured to:

generate multiple pieces of segmented data by segmenting the datasets based on at least one requirement related to the first policy remaining unchanged;
generate a learning model related to a second policy for each of segments by training a machine learning algorithm using each of the pieces of segmented data; and

perform off-policy evaluation for the second policy using an estimated value approximated from each of the pieces of segmented data.

[Aspect 2] The policy evaluation device according to aspect 1, where

the algorithm is a multi-armed bandit algorithm, and
the datasets each include data related to a feature, an action corresponding to the feature, and a result of the action.

[Aspect 3] The policy evaluation device according to aspect 2, where calculation of the estimated value includes weighting an index value indicating a result of the first policy, using a ratio of an action selection probability of the first policy to an action selection probability of the second policy.
[Aspect 4] The policy evaluation device according to any one of aspects 1 to 3, where

the first policy and the second policy each include displaying one of candidate images in a display slot, and
the candidate images remain unchanged in each of the segments

[Aspect 5] The policy evaluation device according to aspect 2 or 3, where

the datasets each include multiple pieces of data acquired each time a user makes a request for displaying a website,
the website includes one or more advertising slots,
the first policy and the second policy each include displaying an advertisement image in each of the advertising slots,
the feature is an attribute of the user, the action is each of candidate images, and the result of the action is whether the user has clicked on the displayed advertisement image, and
the candidate images remain unchanged in each of the segments.

[Aspect 6] The policy evaluation device according to any one of aspects 1 to 3, where

the first policy and the second policy each include selecting one or more target candidates, and
the target candidates remain unchanged in each of the segments.

[Aspect 7] The policy evaluation device according to any one of aspects 1 to 3, where

the first policy and the second policy each include determining a display order in which images are displayed sequentially in a single display slot, and
the images remain unchanged in each of the segments.

[Aspect 8] The policy evaluation device according to any one of aspects 1 to 3, where

the first policy and the second policy each include selecting one or more products or services recommended for a user from multiple products or multiple services, and
at least one of a price of each of the multiple products or the multiple services and an assortment of the multiple products or the multiple services remains unchanged in each of the segments.

[Aspect 9] The policy evaluation device according to any one of aspects 1 to 3, where

the datasets each include multiple pieces of data acquired each time a user makes a search request on a search screen,
the first policy and the second policy each include determining a display order in which search results are displayed on a search results screen, and
at least one of a set of search targets and a set of the search results remains unchanged in each of the segments.

[Aspect 10] A policy evaluation device, including:

one or more memories that stores history data that includes datasets, the history data being a record obtained when a first policy was implemented;
a segmented data generator configured to generate multiple pieces of segmented data by segmenting the datasets based on at least one requirement related to the first policy remaining unchanged;
a learning model generator configured to generate a learning model related to a second policy for each of segments by training a machine learning algorithm using each of the pieces of segmented data; and
an evaluation unit configured to perform off-policy evaluation for the second policy for each of the segments using each of the pieces of segmented data.

[Aspect 11] A policy evaluation device, including:

one or more processors; and
one or more memories, where
at least one of the one or more of the memories stores history data that includes datasets, the history data being a record obtained when a first policy was implemented,
at least one of the one or more processors is configured to:

generate multiple pieces of segmented data by segmenting the datasets using, as a starting point, changes in environment that occur during a period in which the first policy was executed;
generate a learning model related to a second policy for each of segments by training a machine learning algorithm using each of the pieces of segmented data; and

perform off-policy evaluation for the second policy using an estimated value approximated from each of the pieces of segmented data.

[Aspect 12] A policy evaluation device system, including:

the policy evaluation device according to any one of aspects 1 to 11; and
a server that stores history data that includes datasets, the history data being a record obtained when a first policy was implemented.

[Aspect 13] A policy evaluation method including causing one or more computers to:

acquire history data that includes datasets, the history data (38) being a record obtained when a first policy was implemented;
generate multiple pieces of segmented data by segmenting the datasets based on at least one requirement related to the first policy remaining unchanged;
generate a learning model related to a second policy for each of segments by training a machine learning algorithm using each of the pieces of segmented data; and
perform off-policy evaluation for the second policy using an estimated value approximated from each of the pieces of segmented data.

[Aspect 14] A policy evaluation program that causes one or more computers to:

acquire history data that includes datasets, the history data being a record obtained when a first policy was implemented;
generate multiple pieces of segmented data by segmenting the datasets based on at least one requirement related to the first policy remaining unchanged;
generate a learning model related to a second policy for each of segments by training a machine learning algorithm using each of the pieces of segmented data; and
perform off-policy evaluation for the second policy using an estimated value approximated from each of the pieces of segmented data.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

**Claims**

1. A policy evaluation device (30), comprising:

   one or more processors (32); and
   one or more memories (34), wherein
   at least one of the one or more of the memories (34) stores history data (38) that includes datasets, the history data (38) being a record obtained when a first policy was implemented,
   at least one of the one or more processors (32) is configured to:

   generate multiple pieces of segmented data by segmenting the datasets based on at least one requirement related to the first policy remaining unchanged;
   generate a learning model related to a second policy for each of segments by training a machine learning algorithm using each of the pieces of segmented data; and
   perform off-policy evaluation for the second policy using an estimated value approximated from each of the pieces of segmented data.

2. The policy evaluation device (30) according to claim 1, wherein

   the algorithm is a multi-armed bandit algorithm, and
   the datasets each include data related to a feature, an action corresponding to the feature, and a result of the action.

3. The policy evaluation device (30) according to claim 2, wherein calculation of the estimated value includes weighting an index value indicating a result of the first policy, using a ratio of an action selection probability of the first policy to an action selection probability of the second policy.

4. The policy evaluation device (30) according to any one of claims 1 to 3, wherein

   the first policy and the second policy each include displaying one of candidate images in a display slot, and
   the candidate images remain unchanged in each of the segments.

5. The policy evaluation device (30) according to claim 2 or 3, wherein

   the datasets each include multiple pieces of data acquired each time a user makes a request for displaying a website,
   the website includes one or more advertising slots (41),
   the first policy and the second policy each include displaying an advertisement image in each of the advertising slots (41),
   the feature is an attribute of the user, the action is each of candidate images, and the result of the action is whether the user has clicked on the displayed advertisement image, and
   the candidate images remain unchanged in each of the segments.

6. The policy evaluation device (30) according to any one of claims 1 to 3, wherein

   the first policy and the second policy each include selecting one or more target candidates, and
   the target candidates remain unchanged in each of the segments.

7. The policy evaluation device (30) according to any one of claims 1 to 3, wherein

   the first policy and the second policy each include determining a display order in which images are displayed sequentially in a single display slot, and
   the images remain unchanged in each of the segments.

8. The policy evaluation device (30) according to any one of claims 1 to 3, wherein

   the first policy and the second policy each include selecting one or more products or services recommended for a user from multiple products or multiple services, and

at least one of a price of each of the multiple products or the multiple services and an assortment of the multiple products or the multiple services remains unchanged in each of the segments.

9. The policy evaluation device (30) according to any one of claims 1 to 3, wherein

the datasets each include multiple pieces of data acquired each time a user makes a search request on a search screen,

the first policy and the second policy each include determining a display order in which search results are displayed on a search results screen, and

at least one of a set of search targets and a set of the search results remains unchanged in each of the segments.

10. A policy evaluation method comprising causing one or more computers to:

acquire history data (38) that includes datasets, the history data (38) being a record obtained when a first policy was implemented;

generate multiple pieces of segmented data by segmenting the datasets based on at least one requirement related to the first policy remaining unchanged;

generate a learning model related to a second policy for each of segments by training a machine learning algorithm using each of the pieces of segmented data; and

perform off-policy evaluation for the second policy using an estimated value approximated from each of the pieces of segmented data.

11. A policy evaluation program that causes one or more computers to:

acquire history data (38) that includes datasets, the history data (38) being a record obtained when a first policy was implemented;

generate multiple pieces of segmented data by segmenting the datasets based on at least one requirement related to the first policy remaining unchanged;

generate a learning model related to a second policy for each of segments by training a machine learning algorithm using each of the pieces of segmented data; and

perform off-policy evaluation for the second policy using an estimated value approximated from each of the pieces of segmented data.

## Fig.1

## Fig.2

Fig.3

```
        ┌─────────────┐
        │    Start    │
        └─────────────┘
               │  ⌒S11
               ▼
┌────────────────────────────────────┐
│  Acquire machine learning algorithm │
└────────────────────────────────────┘
               │  ⌒S12
               ▼
┌────────────────────────────────────┐
│         Acquire history data        │
└────────────────────────────────────┘
               │  ⌒S13
               ▼
┌────────────────────────────────────┐
│        Generate segmented data      │
└────────────────────────────────────┘
               │  ⌒S14
               ▼
┌────────────────────────────────────┐
│         Optimize second policy      │
└────────────────────────────────────┘
               │  ⌒S15
               ▼
┌────────────────────────────────────┐
│     Calculate estimated value of OPE│
└────────────────────────────────────┘
               │
               ▼
        ┌─────────────┐
        │     End     │
        └─────────────┘
```

Europäisches
Patentamt
European
Patent Office
Office européen
des brevets

# EUROPEAN SEARCH REPORT

**Application Number**

EP 23 20 4884

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Saito Yuta ET AL: "Open Bandit Dataset and Pipeline: Towards Realistic and Reproducible Off-Policy Evaluation", arXiv (Cornell University), 17 August 2020 (2020-08-17), XP093129910, Ithaca DOI: 10.48550/arxiv.2008.07146 Retrieved from the Internet: URL:https://arxiv.org/pdf/2008.07146.pdf [retrieved on 2024-02-11] * page 1 – page 30 * ----- | 1-11 | INV. G06Q30/0251 G06Q30/0272 G06Q30/0241 |
| Y | US 2020/012902 A1 (WALTERS AUSTIN [US] ET AL) 9 January 2020 (2020-01-09) * the whole document * ----- | 1-11 | |
| Y | US 2021/150548 A1 (DUA RAJDEEP [IN] ET AL) 20 May 2021 (2021-05-20) * the whole document * ----- | 1-11 | |
| | | | TECHNICAL FIELDS SEARCHED (IPC) G06Q |

The present search report has been drawn up for all claims

| Place of search | Date of completion of the search | Examiner |
|---|---|---|
| The Hague | 28 February 2024 | Lutz, Andreas |

EPO FORM 1503 03.82 (P04C01)

## ANNEX TO THE EUROPEAN SEARCH REPORT
## ON EUROPEAN PATENT APPLICATION NO.

EP 23 20 4884

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2024

| Patent document cited in search report | Publication date | | Patent family member(s) | Publication date |
|---|---|---|---|---|
| US 2020012902 A1 | 09-01-2020 | EP | 3591587 A1 | 08-01-2020 |
| | | US | 10379995 B1 | 13-08-2019 |
| | | US | 10382799 B1 | 13-08-2019 |
| | | US | 10452455 B1 | 22-10-2019 |
| | | US | 10459954 B1 | 29-10-2019 |
| | | US | 10460235 B1 | 29-10-2019 |
| | | US | 10482607 B1 | 19-11-2019 |
| | | US | 10521719 B1 | 31-12-2019 |
| | | US | 2019327501 A1 | 24-10-2019 |
| | | US | 2020012540 A1 | 09-01-2020 |
| | | US | 2020012583 A1 | 09-01-2020 |
| | | US | 2020012584 A1 | 09-01-2020 |
| | | US | 2020012657 A1 | 09-01-2020 |
| | | US | 2020012662 A1 | 09-01-2020 |
| | | US | 2020012666 A1 | 09-01-2020 |
| | | US | 2020012671 A1 | 09-01-2020 |
| | | US | 2020012811 A1 | 09-01-2020 |
| | | US | 2020012886 A1 | 09-01-2020 |
| | | US | 2020012890 A1 | 09-01-2020 |
| | | US | 2020012891 A1 | 09-01-2020 |
| | | US | 2020012892 A1 | 09-01-2020 |
| | | US | 2020012900 A1 | 09-01-2020 |
| | | US | 2020012902 A1 | 09-01-2020 |
| | | US | 2020012917 A1 | 09-01-2020 |
| | | US | 2020012933 A1 | 09-01-2020 |
| | | US | 2020012934 A1 | 09-01-2020 |
| | | US | 2020012935 A1 | 09-01-2020 |
| | | US | 2020014722 A1 | 09-01-2020 |
| | | US | 2020051249 A1 | 13-02-2020 |
| | | US | 2020065221 A1 | 27-02-2020 |
| | | US | 2020117998 A1 | 16-04-2020 |
| | | US | 2020218637 A1 | 09-07-2020 |
| | | US | 2020218638 A1 | 09-07-2020 |
| | | US | 2020250071 A1 | 06-08-2020 |
| | | US | 2020293427 A1 | 17-09-2020 |
| | | US | 2021049054 A1 | 18-02-2021 |
| | | US | 2021081261 A1 | 18-03-2021 |
| | | US | 2021182126 A1 | 17-06-2021 |
| | | US | 2021200604 A1 | 01-07-2021 |
| | | US | 2021224142 A1 | 22-07-2021 |
| | | US | 2021255907 A1 | 19-08-2021 |
| | | US | 2021365305 A1 | 25-11-2021 |
| | | US | 2022075670 A1 | 10-03-2022 |
| | | US | 2022083402 A1 | 17-03-2022 |
| | | US | 2022092419 A1 | 24-03-2022 |
| | | US | 2022107851 A1 | 07-04-2022 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 23 20 4884

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2024

| Patent document cited in search report | Publication date | Patent family member(s) | | Publication date |
|---|---|---|---|---|
| | | US | 2022147405 A1 | 12-05-2022 |
| | | US | 2022308942 A1 | 29-09-2022 |
| | | US | 2022318078 A1 | 06-10-2022 |
| | | US | 2023073695 A1 | 09-03-2023 |
| | | US | 2023153177 A1 | 18-05-2023 |
| | | US | 2023195541 A1 | 22-06-2023 |
| | | US | 2023205610 A1 | 29-06-2023 |
| | | US | 2023273841 A1 | 31-08-2023 |
| | | US | 2023281062 A1 | 07-09-2023 |
| | | US | 2023297446 A1 | 21-09-2023 |
| | | US | 2023376362 A1 | 23-11-2023 |
| | | US | 2024054029 A1 | 15-02-2024 |
| US 2021150548 A1 | 20-05-2021 | NONE | | |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022032204 A

**Non-patent literature cited in the description**

- **YUTA SAITO et al.** *Open Bandit Dataset and Pipeline: Towards Realistic and Reproducible Off-Policy Evaluation,* 26 October 2021, https://arxiv.org/abs/2008.07146>